Europäisches Patentamt

European Patent Office

Office européen des brevets

(11) Veröffentlichungsnummer: **0 307 589**

**A2**

(12) **EUROPÄISCHE PATENTANMELDUNG**

(21) Anmeldenummer: **88112017.4**

(22) Anmeldetag: **26.07.88**

(51) Int.-Cl.4: **A47J 31/057 , A47J 31/54**

(30) Priorität: **11.09.87 DE 8712337 U**

(43) Veröffentlichungstag der Anmeldung:
**22.03.89 Patentblatt 89/12**

(84) Benannte Vertragsstaaten:
**CH FR GB IT LI NL SE**

(71) Anmelder: **ROBERT KRUPS STIFTUNG & CO. KG.**
**Heresbachstrasse 29**
**D-5650 Solingen 19(DE)**

(72) Erfinder: **Gehrmann, Alfred**
**Strandbadweg 16**
**D-5650 Solingen 19(DE)**

(74) Vertreter: **Buse, Karl Georg, Dipl.-Phys. et al**
**Patentanwälte Dipl.-Phys. Buse Dipl.-Phys. Mentzel Dipl.-Ing. Ludewig Unterdörnen 114**
**D-5600 Wuppertal 2(DE)**

(54) **Elektrisch betriebenes Gerät zum Zubereiten von Heissgetränken, wie Kaffee, oder dergleichen.**

(57) Es handelt sich um ein elektrisch betriebenes Gerät zum Zubereiten von Heißgetränken, wie Kaffee, Tee od.dgl., dessen Gehäuse einen Frischwasserbehälter aufnimmt. Der Auslauf des Frischwasserbehälters ist mit einem Durchlauferhitzer verbunden, aus dem das erhitzte Wasser in ein Steigrohr gelangt. Der Auslauf des Steigrohres ist über einem Filterbehälter angeordnet, der das zu behandelnde Gut, wie Kaffeemehl od.dgl. aufnimmt. Unter dem Filterbehälter steht ein Auffangbehälter, wie ein Glaskrug. Dieser ist auf einem Gehäuseteil des Gerätes, insbesondere auf einem Aufstellfuß abgestellt. Der Einlaß und der Auslaß des Wasserrohres des Durchlauferhitzers des Kaffeeautomaten sind unter Zwischenschaltung je einer Dichtung unmittelbar an den Auslaß des Frischwasserbehälters bzw. an den Einlaß des Steigrohres angeschlossen.

FIG.2

EP 0 307 589 A2

## Elektrisch betriebenes Gerät zum Zubereiten von Heißgetränken, wie Kaffee, Tee oder dergleichen.

Die Erfindung bezieht sich auf ein elektrisch betriebenes Gerät zum Zubereiten von Heißgetränken wie Kaffee, Tee oder dergleichen, dessen Gehäuse einen Frischwasserbehälter aufnimmt, dessen Auslauf mit einem Durchlauferhitzer verbunden ist, aus dem das erhitzte Wasser in ein Steigrohr gelangt, dessen Auslauf über einem Filterbehälter angeordnet ist, der das zu behandelnde Gut, wie Kaffeemehl oder dergleichen aufnimmt, und unter dem ein Auffangbehälter angeordnet ist, welcher auf einem Gehäuseteil, wie einem Aufstellfuß, ruht.

Derartige, elektrisch betriebene Geräte zum Zubereiten von Heißgetränken, insbesondere Kaffeeautomaten, sind in zahlreichen Ausführungsformen bekannt. Dies gilt auch für die in solche Kaffeeautomaten eingesetzte Durchlauferhitzer. Derartige Durchlauferhitzer bestehen in aller Regel aus einem Wasserrohr, welches U-förmig gekrümmt ist und an dessen Wandungen eine ebenfalls U-förmig gekrümmte elektrische Heizung anliegt. Dabei wird eine flächenmäßige Berührung zwischen dem Wasserrohr und dem Heizrohr gewählt, um einen guten Wärmeübergang von dem Heizrohr auf das im Inneren des Wasserrohres geführte Wasser zu erzielen. Das Wasserrohr hat dabei einen Einlaß für das dem Frischwasser behälter entnommene Wasser und parallel und im Abstand dazu liegend einen Auslaß, der mit dem Steigrohr zu verbinden ist, um durch ihn und das Steigrohr das erhitzte Wasser in den oberen Bereich des Gehäuses zu führen, damit es von dort in den Filter und damit in den Bereich des Kaffeemehls gelangt.

Die bisher bekannten Durchlauferhitzer liegen in aller Regel waagerecht zur Aufstellfläche des Kaffeeautomaten in einem Hohlraum des Aufstellfußes oder eines ähnlichen Gehäuseteiles. Demgegenüber sind sowohl der Frischwasserbehälter als auch das Steigrohr vertikal im Gehäuse bzw. am Gehäuse des Kaffeeautomaten angeordnet. Dies bedeutet, daß gekrümmte oder zum Beispiel als Winkelstücke ausgebildete Kupplungsglieder vorhanden sein müssen, um den in der Horizontalen liegenden Einlaß und Auslaß des Wasserrohres jeweils mit dem Auslaß des Frischwasserbehälters bzw. dem Einlaß des Steigrohres zu verbinden. Dabei gibt es unterschiedlich gestaltete Kupplungsstücke. Sie setzen jedoch in allen Fällen voraus, daß ein elastisch nachgiebiges Endstück auf allen Seiten vorhanden sein muß, weil dieses mit dem Auslaßstutzen des Frischwasserbehälter und dem Einlaß des Wasserrohres einerseits und dem Auslaß des Wasserrohres und dem Steigrohr andererseits verbunden werden muß. Diese, bisher übliche, Ausbildung des Durchlauferhitzers und der mit ihm zusammenwirkenden Teile, bedingt eine aufwendige Montage, und ist daher verhältnismäßig kostspielig.

Hier will die Erfindung Abhilfe schaffen. Ihr liegt die Aufgabe zu Grunde, einen Durchlauferhitzer für elektrisch betriebene Kaffeeautomaten der eingangs näher gekennzeichneten Art zu schaffen, bei dem die Verbindung zwischen dem Wasserrohr des Durchlauferhitzers einerseits und dem Frischwasserbehälter und des Steigrohres andererseits wesentlich vereinfacht werden kann. Insbesondere soll diese Verbindung so gestaltet werden, daß ein maschinelles Zusammenführen der genannten Teile ermöglicht wird. Auf diese Weise sollen die Montagezeiten und damit auch die Montagekosten gegen über dem Bekannten erheblich reduziert werden. Dieses Ziel ist erfindungsgemäß dadurch erreicht, daß der Einlaß und der Auslaß des Wasserrohres des Durchlauferhitzers des Kaffeeautomaten unter Zwischenschaltung je einer Dichtung unmittelbar an den Auslaß des Frischwasserbehälters beziehungsweise an den Einlaß des Steigrohres anschließbar sind.

Bei der bevorzugten Ausführungsform der Erfindung sind der Einlaß und der Auslaß des Wasserrohres jeweils über einen angeformten Anschlußbereich abgedichtet, an einen Stutzen des Frischwasserbehälters beziehungsweise des Steigrohres angeschlossen. Die erfindungsgemäße Ausbildung des Durchlauferhitzers eines Kaffeeautomaten der genannten Art hat gegenüber dem Bekannten erhebliche Vorteile. Diese liegen zunächst darin, daß auf zusätzliche Kupplungs- oder Verbindungsstücke zwischen dem Einlaß und dem Auslaß des Wasserrohres einerseits und dem Frischwasserbehälter und dem Steigrohr andererseits ganz verzichtet wird. Stattdessen wird der Einlaß des Wasserrohres unmittelbar mit dem Auslaß des Frischwasserbehälters und der Auslaß des Wasserrohres unmittelbar mit dem Einlaß des Steigrohres verbunden. Damit entfallen nicht nur die Herstellungskosten für die bisher üblichen Kupplungs- oder Verbindungsstücke zwischen den genannten Teilen, sondern auch die aufwendige Montage. Dabei ist zu berücksichtigen, daß das Verbinden des Einlaß des Wasserrohres mit dem Frischwasserbehälter durch einfaches Zusammenstecken erfolgen kann, was unter Zwischenschaltung einer Dichtung geschieht. Auf die gleiche Weise erfolgt auch die Verbindung zwischen dem Auslaß des Wasserrohres und dem Einlaß des Steigrohres. Dabei werden diese beiden Arbeitsgänge zusammengelegt, das heißt, es erfolgt ein gleichzeitiges Ineinanderstecken der genannten Teile, so daß eine solche Verbindung ohne weiteres in Fertigungsstraßen eingesetzt werden kann. Es ist nämlich ein einfaches Zusammenstecken der genannten Teile möglich, wobei durch die zwischengeschaltete Dichtung sofort ein Abdichten im Bereich der Verbindungsstellen erfolgt. Insbesondere ist es nunmehr möglich, den Durchlauferhitzer als Baueinheit vorzufertigen, wobei er zusätzlich auch mit einer Tragplatte beziehungsweise einer Aufstellplatte für den Getränkebehälter versehen sein kann. Eine solche Baueinheit wird dann durch einfaches Aufstecken mit dem Auslaß des Frischwasserbehälters und dem Steigrohr verbunden. Auf diese Weise wird eine außerordentlich einfache und damit preiswerte Verbindung zwischen den genannten Teilen erzielt.

Es empfiehlt sich, im Bereich des äußersten freien Endes des Anschlußbereiches, sowohl des Einlasses als auch des Auslasses des Wasserrohres, eine Nut, vorzugsweise eine Ringnut, anzuordnen, die eine Dichtung aufnimmt, deren Umfangsfläche mit der Innenwand des jeweiligen Stutzens zusammenwirkt. Die Nut, vorzugsweise die Ringnut, wird bei der Erzeugung des Wasserrohres sofort mitgeschaffen. Die Dichtung, die aus einem gummielastischen, ringförmigen Material besteht, läßt sich dann leicht in eine solche Nut einfügen. Sie bildet nach dem Anbringen einen Bestandteil der Baueinheit. Dabei ist es von Vorteil, daß die gummielastische Dichtung in einer Ringnut liegt und daher lagegesichert ist. Dies bedeutet, daß beim Zusammenstecken des Einlasses und des Auslasses des Wasserrohres mit dem Stutzen, vom Frischwasserbehälter und Steigrohr keine Verschiebung der Dichtung erfolgt. Dabei hat man es in der Hand, die Breite der Nut zu variieren. Wenn man beispielsweise eine größere Dichtfläche haben will, dann wird die Breite der Nut vergrößert. In vielen Fällen genügt aber auch eine verhältnismäßig schmale Nut, wobei denn die Abmessungen der Dichtung entsprechend klein gehalten werden können.

Bei der bevorzugten Ausführungsform der Erfindung schließt der Anschlußbereich, sowohl des Einlasses als auch des Auslasses des Wasserrohres mit diesen einen Winkel, vorzugsweise einen rechten Winkel, ein. Durch diese Ausbildung kann der Tatsache Rechnung getragen werden, daß in aller Regel der Durchlauferhitzer im Abstand und parallel zur Aufstellfläche in einem Hohlraum des Aufstellfußes angeordnet ist, während sowohl der Frischwasserbehälter als auch das Steigrohr senkrecht zu dieser Aufstellfläche angeordnet sind. Wenn die Anschlußbereiche des Durchlauferhitzers einen Winkel von etwa 90° aufweisen, dann kann auf einfache Weise dieser lagemäßig unterschiedlichen Anordnung der genannten Teile Rechnung getragen werden. Sofern erforderlich, kann selbstverständlich der Winkel des Anschlußbereiches gegenüber dem Einlaß und/oder dem Auslaß abweichend von 90° gehalten werden, wenn dies die jeweilige Konstruktion des Kaffeeautomaten dies erforderlich machen sollte.

Der Durchlauferhitzer selbst kann unterschiedlich gestaltet sein, wobei man grundsätzlich auf bekannte Durchlauferhitzer zurückgreifen kann. Dies bedeutet, daß der Durchlauferhitzer sowohl aus einem Wasserrohr und einem damit zusammenwirkenden Heizrohr bestehen kann, die von einem gemeinsamen Träger aufgenommen werden, und die sich flächenmäßig berühren, zur Erzielung eines guten Wärmeüberganges. Dabei kann bei der Ausgestaltung der elektrischen Heizung auf bekannte Ausführungsformen zurückgegriffen werden, um eine möglichst lange Berührungsfläche, und damit eine möglichst große Wärmeübertragung zu erzielen, wird wie allgemein bekannt eine U-förmige ineinandergeschachtelte Ausbildung von Wasserrohr und Heizung benutzt. Daneben ist es aber auch möglich, auf die Verwendung eines normalen Heizrohres zu verzichten. In diesem Falle wird die Heizung des Durchlauferhitzers als Dickschichtheizung ausgebildet, deren aus pastenförmigem Werkstoff gebildete Dickschichtleiterbahn wenigstens eine Seite des Durchlauferhitzers erfaßt, und deren eines Ende mit einem Schalter und deren anderes Ende mit einem Relais in Verbindung steht. Bei dieser Ausführungsform kommt somit das U-förmig gekrümmte Heizrohr in Fortfall. Bei dem dabei einzusetzenden Schalter und dem Relais kann es sich um handelsübliche Ausführungsformen handeln.

Auf den Zeichnungen ist die Erfindung in mehreren Ausführungsbeispielen dargestellt, und zwar zeigen:

Fig. 1 in Seitenansicht, teilweise geschnitten, einen elektrisch betriebenen Kaffeeautomaten mit einem, in seinem Inneren angeordneten erfindungsgemäß ausgebildeten Durchlauferhitzer;

Fig. 2 in schaubildlicher Darstellung und vergrößertem Maßstab eine erste Ausführungsform eines erfindungsgemäßen Durchlauferhitzers zur Verwendung in dem Kaffeeautomat gemäß der Figur 1 der Zeichnung;

Fig. 3 im vergrößerten Maßstab einen Teilschnitt durch den Kaffeeautomat, umfassend den Bereich III der Figur 1 der Zeichnung;

Fig. 4 in schematischer Darstellung eine weitere Ausführungsform eines Durchlauferhitzers, der in einen Kaffeeautomat gemäß der Figur 1 eingesetzt werden soll.

Es sei zunächst erwähnt, daß in den Figuren der Zeichnungen nur diejenigen Teile eines elektrisch betriebenen Gerätes zum Zubereiten von Heißgetränken, wie Kaffee, Tee oder dergleichen, dargestellt sind, die für das Verständnis der Erfindung Bedeutung haben. So fehlen insbesondere Teile der elektrischen Anschlüsse, ferner zugehörige Schalt- und Steuereinrichtungen sowie die Verbindungsleitungen dieser Teile untereinander.

Alle in den Figuren der Zeichnungen nicht dargeststellten Teile können einen an sich bekannten Aufbau haben und in ebenfalls an sich bekannter Weise miteinander zusammenwirken.

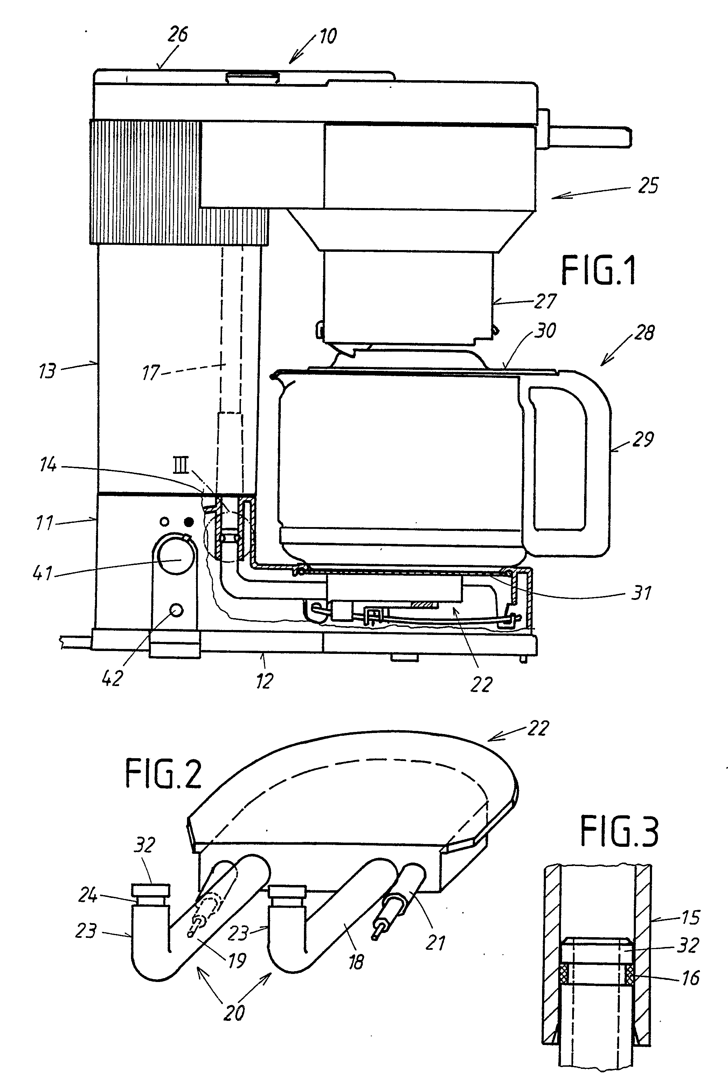

Dem Ausführungsbeispiel nach der Figur 1 der Zeichnung ist ein in seinem Aufbau grundsätzlich bekanntes elektrisch betriebenes Gerät zum Zubereiten von Kaffee, nämlich ein sogenannter Kaffeeautomat zu Grunde gelegt. Dieser Kaffeeautomat ist generell mit 10 bezeichnet. Der Kaffeeautomat 10 hat ein Gehäuse 11 aus einem elektrisch isolierenden Werkstoff mit einem im wesentlichen L-förmigen Querschnitt. Der längere der beiden Schenkel dieses L's ist dabei als hohler Aufstellfuß 12 ausgebildet. Dessen Unterseite dient zugleich als Stellfläche für den Kaffeeautomat 10. Auf der oberen Stirnseite des kürzeren Schenkels des Gehäuses 11 ist ein Frischwasserbehälter 13 angeordnet. Der Kaffeeautomat 10 hat ferner eine nicht näher bezeichnete obere Abdeckung. In diesem Bereich liegt auch ein Klappdeckel 26, der über eine scharnierartige Verbindung mit dem Gehäuse verbunden ist. Dieser Klappdeckel 26 kann aus der in der Figur 1 dargestellten Wirklage in eine aufgeklappte Einfüll-Lage überführt werden, um somit dem Benutzer die Möglichkeit zu geben, Frischwasser in den Frischwasserbehälter 13 von oben her einzugießen. Unterhalb der einen, in der Figur 1 rechten Hälfte der Abdeckung liegt ein Filter 25. Dieser ist im gewählten Ausführungsbeispiel als Schwenkfilter ausgebildet. Er kann daher aus seiner, in der Figur 1 dargestellten Schließlage durch Verschwenken in eine Öffnungsstellung überführt werden. Dabei wird die obere Öffnung des Filters 25 freigegeben, so daß eine Filtertüte eingelegt und in diese das Kaffeemehl in der üblichen Weise eingebracht werden kann. Oberhalb des Filters 25 liegt der Auslaß für das erhitzte, vom Durchlauferhitzer 22 kommende, Wasser, welches mit dem Kaffeemehl in der Filtertüte in Wirkverbindung treten soll. Unterhalb des Filters 25 befindet sich ein Endstutzen 27, der mit ihm einstückig gehalten ist, und der einen nicht näher bezeichneten Auslaß für das fertige Getränk aufweist. Unterhalb des Filters 25 und damit unterhalb des Auslasses ist ein Auffangbehälter 28 angeordnet, der auf einer Stellfläche des Aufstellfußes 12 ruht. Mit 31 ist dabei eine Aufstellplatte bezeichnet. Der aus einem durchsichtigen Werkstoff gefertigte Auffangbehälter 28 hat einen Handgriff 29 und einen Deckel 30 zum Verschließen seiner oberen Öffnung. Dabei wirkt der Deckel 30 in bekannter Weise mit einer Einrichtung des Endstutzens 27 zusammen, die das Nachtropfen von Kaffee oder dergleichen verhindern soll, wenn der Auffangbehälter 28 von der Stellfläche entfernt wird.

In der Figur 1 rechten Seite des hohlen Aufstellfußes 12 ist der in der Figur 2 dargestellte Durchlauferhitzer 22 untergebracht. Das Prinzip des Durchlauferhitzers 22 ist grundsätzlich bekannt. Beim bestimmungsgemäßen Gebrauch desselben, gelangt in den Einlaß 18 eines Wasserrohres 20 Frischwasser aus dem Frischwasserbehälter 13, welches von einer Heizung 21 erwärmt wird und dann über einen Auslaß 19 in ein Steigrohr 17 gelangt, von dort in den Bereich der oberen Abdeckung des Gehäuses des Kaffeeautomaten 10 überführt wird. Das erhitzte Wasser gelangt schließlich durch eine Querverbindung über den Bereich des Filters 25. Es durchsetzt das Kaffeemehl im Filter 25 und gelangt als fertiges Getränk in den Auffangbehälter 28.

Zum Inbetriebsetzen des Kaffeeautomaten 10 dient der Schalter 41, der im gewählten Ausführungsbeispiel als Drehschalter ausgebildet ist. Unterhalb dieses Drehschalters liegt eine Kontrolleuchte 42, die dem Benutzer des Kaffeeautomaten 10 anzeigt, ob dieser in Betrieb ist oder nicht.

Der in der Figur 2 der Zeichnung dargestellte erfindungsgemäß ausgebildete Durchlauferhitzer hat ein generell mit 20 bezeichnetes Wasserrohr, dessen rückwärtiger Teil U-förmig gestaltet ist. Aus einem üblichen Träger des Durchlauferhitzers 22 ragt einmal der Einlaß 18 des Wasserrohres 20 heraus und parallel und in Abstand dazu auch der Auslaß 19. Beide gehen - im gewählten Ausführungsbeispiel sind sie untereinander gleich gestaltet - jeweils in den Anschlußbereich 23 über. Dieser ist im Bezug auf den Einlaß 18 beziehungsweise den Auslaß 19 um jeweils etwa 90° nach oben abgebogen. Im Bereich des äußersten freien Endes 32 des Anschlußbereiches 23 ist eine Nut 24 vorgesehen, die zur Aufnahme einer Dichtung 16 dient. Diese Dichtung wirkt, wie die Figur 3 zeigt, mit der Innenwand eines Stutzens 15 zusammen. Dieser Stutzen 15 gehört zu dem Steigrohr 17. Ein ähnlicher Stutzen befindet sich im Bereich des Auslasses des Frischwasserbehälters 13, so daß auch der Einlaß 18 über seinen nach oben gekrümmten Anschlußbereich 23 direkt mit einem nicht gezeichneten Stutzen am Boden des Frischwasserbehälters 13 verbunden werden kann. Auch dies geschieht wiederum unter Verwendung einer Dichtung 16, die in die umlaufende Nut 24 des Anschlußbereiches 23 eingelegt ist, und dessen Außenwandung mit der Innenwandung eines Stutzens des Frischwasserbehälters 13 zusammenwirkt. Die Verbindung der Stutzen 15 sowohl des Steigrohres, als auch des Frischwasserbehälters 13, mit den Anschlußbereichen 23 des Einlasses 18 beziehungsweise des Auslasses 19 des Wasserrohres 20 geschieht durch einfaches Aufstecken. Dabei gelangt das äußerste freie Ende 32 in den inneren Hohlraum des Stutzens 15. Dadurch ist mit einfachsten Mitteln ein Zusammenstecken der genannten Teile erfolgt. Dies geschieht unter Abdichtung, weil die Umfangsfläche der Dichtung 16 an den Innenwandungen des Stutzens 15 anliegt und somit der Austritt von Wasser in diesem Bereich verhindert wird.

Im Gegensatz zu den bekannten Ausführungsformen wird somit auf separate Verbindungs- und/oder Kupplungselemente zwischen dem Einlaß und dem Auslaß des Wasserrohres einerseits und dem Frischwasserbehälter und dem Steigrohr andererseits verhindert. Stattdessen wird ein einstückiges Wasserrohr 20 benutzt, das sowohl mit dem Einlaß als auch mit dem Auslaß 19 sowie mit den nach oben gerichteten Anschlußbereichen 23 ausgerüstet ist, an denen sich im Bereich des äußersten freien Endes jeweils eine Ringnut 24 befindet, die zur Aufnahme der Dichtung dient. Eine solche Ausbildung läßt nicht nur eine wohlfeile Herstellung des Durchlauferhitzers 22 zu, sondern macht sich auch vorteilhaft bei der Montage des Kaffeeautomaten 10 bemerkbar, weil das Anschließen der Anschlußbereiche 23 des Wasserrohres 20 durch einfaches Einstecken erfolgen kann, wobei zugleich die Dichtung in ihre wirksame Lage überführt wird.

Zum Durchlauferhitzer 22 gehört auch das Heizrohr 21, welches eine bekannte Ausbildung haben kann und welches ebenfalls U-förmig gestaltet ist. Es liegt flächenhaft an der Außenwand des Wasserrohres 20 an, um so einen guten Wärmeübergang zu gewährleisten.

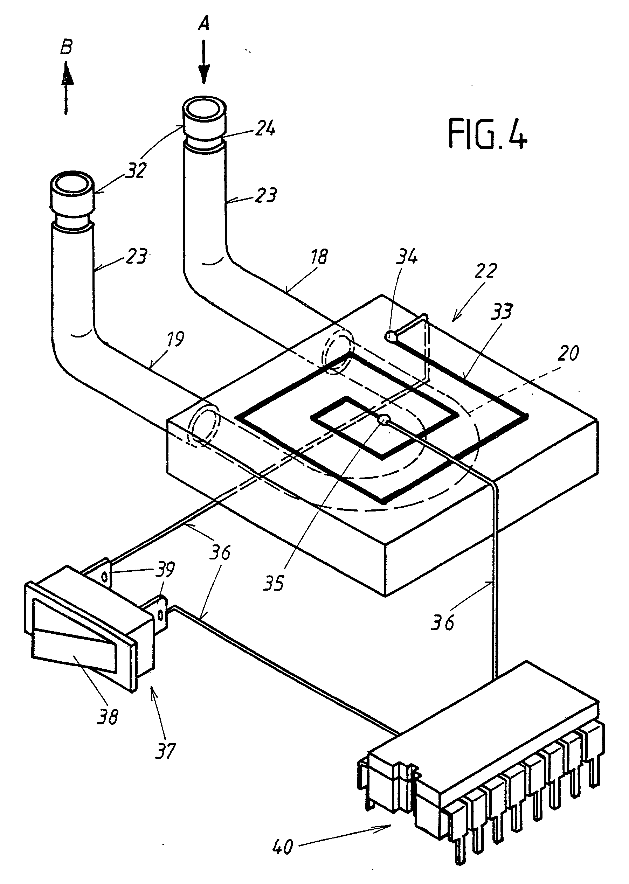

Bei dem zweiten Ausführungsbeispiel des Durchlauferhitzers 22 gemäß der Figur 4 der Zeichnung wird wiederum ein in seinem rückwärtigen Bereich U-förmig gestaltetes Wasserrohr 20 benutzt. Auch hier ist ein Einlaß 18 und ein Auslaß 19 vorhanden, die beide in den Anschlußbereich 23 übergehen, der etwa senkrecht zu dem Ein- beziehungsweise Auslaß angeordnet ist. Im Bereich des äußersten freien Endes 32 des Anschlußbereiches 23 liegt jeweils eine Ringnut 24 zur Aufnahme einer Dichtung 16. Die Einströmrichtung ist in der Figur 4 mit A, die Ausströmöffnung mit B, gekennzeichnet. Das Wasser gelangt somit aus den Frischwasserbehälter 13 in den Einlaß 18, und das erhitzte Wasser strömt durch den Auslaß 19 in Richtung des Pfeiles B im Steigrohr 17 nach oben. Die äußersten freien Enden 32 des Anschlußbereiches 23 sind dabei wie beim ersten Ausführungsbeispiel wiederum direkt mit einem Stutzen gekoppelt. Dieser Stutzen ist einmal dem Frischwasserbehälter und zum anderen dem Steigrohr 17 zugeordnet.

In der Figur 4 der Zeichnung ist eine zweite Ausführungsform des Durchlauferhitzers 22 dargestellt. Dieser hat einen quaderförmigen Grundkörper aus einem metallischen Grundstoff - beispielsweise aus Aluminium -. Der Grundkörper nimmt den rückwärtigen Teil des Wasserrohres 20 auf.

An Stelle der rohrförmigen elektrischen Heizung 21 der Ausführungsform des Durchlauferhitzers nach der Figur 2 der Zeichnung hat derjenige nach der Figur 4 der Heizung, die nach dem Dickschichtheizprinzip arbeitet. Dies bedeutet, daß auf der Oberseite des Durchlauferhitzers 22, gemäß der Figur 4 der Zeichnung, eine Dickschichtleiterbahn 33 angebracht ist, deren I. Ende mit einem Schalter 37 in Verbindung steht und deren II. Ende über eine Verbindungsleitung 36 mit einem Relais 40 verbunden ist. Weitere Verbindungsleitungen, die alle mit 36 bezeichnet sind, befinden sich zwischen dem Schalter 37 und dem Relais 40 und zwischen dem Schalter 37 und dem I. Ende 34 der Dickschichtleiterbahn 33. Bei dem Schalter 37 kann es sich um einen im Handel erhältlichen Schalter handeln, der auf seiner Rückseite Anschlußkontakte 39 aufweist, an deren die zugekehrten Enden der Anschlußleitungen 36 in bekannter Weise festgelegt, beispielsweise angelötet, werden können. Der Schalter 37 hat einen Betätiger 38, der im dargestellten Ausführungsbeispiel als einfacher Schalter ausgebildet ist, der teilweise vom Benutzer in eine Einschalt- beziehungsweise eine Ausschaltstellung überführt werden kann. Bei dem Relais 40 nach der Figur 4 der Zeichnung kann es sich um ein solches handeln, welches von der Firma MOTOROLA unter der Typenbezeichnung CMOS auf den Markt gebracht wird.

Bei der Dickschichtheizung des Durchlauferhitzers 22 nach der Figur 4 der Zeichnung, handelt es sich um eine PTC-Heizung. Bei einem Ausführungsbeispiel ist vorgesehen eine PTC-Heizung von 500 Watt zu benutzen, die unter Einschaltung des Relais 14 acht Minuten lang betrieben wird, dann automatisch auf 30 Watt umschaltet. Die 30-Watt-Leistung genügt, um das in dem Auffangbehälter 28 befindliche Getränk wie Kaffee warmzuhalten. Nach einer gewünschten einstellbaren Zeit kann dann die vollständige Abschaltung erfolgen.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere für die Ausbildung und Gestalt des Anschlußbereiches 23, sowohl des Einlasses 18 als auch des Auslasses 19 des Wasserrohres 20. So kann beispielsweise der Winkel zwischen den Anschlußbereichen 23 und dem Ein- und Auslaß abweichend von 90° gewählt werden. Auch kann eine andere, als die Dichtung 16, benutzt werden. Aus herstellungstechnischen Gründen ist es zwar erstrebenswert, daß die Anschlußbereiche 23 untereinander die gleiche Ausbildung haben, jedoch ist es auch ohne weiteres denkbar, diese unterschiedlich zu gestalten, beispielsweise sie unterschiedliche Länge aufweisen zu lassen. Eine solche Ausbildung kann beispielsweise dann gewählt werden, wenn die beim Kaffeeautomaten 10 vorhandenen Ausführungsformen von Frischwasserbehälter 13 einerseits und Steigrohr 17 dies erforderlich machen.

## BEZUGSZEICHENLISTE

10 = Kaffeeautomat
11 = Gehäuse (von 10)
12 = Aufstellfuß (von 11)
13 = Frischwasserbehälter
14 = Boden (von 13)
15 = Stutzen
16 = Dichtung
17 = Steigrohr
18 = Einlaß (von 20)
19 = Auslaß (von 20)
20 = Wasserrohr
21 = Heizrohr
22 = Durchlauferhitzer
23 = Anschlußbereich (von 20)
24 = Nut (in 23)
25 = Filter
26 = Klappdeckel
27 = Endstutzen
28 = Auffangbehälter
29 = Handgriff (von 28)
30 = Deckel (von 28)
31 = Aufstellplatte
32 = äußerstes (freies) Ende (von 23)
33 = Dickschichtleiterbahn (Fig. 4)
34 = I. Ende (von 33)
35 = II. Ende (von 33)
36 = Verbindungsleitungen
37 = Schalter
38 = Betätiger
39 = Anschlußkontakte
40 = Relais
41 = Schalter
42 = Kontroll-Leuchte.

## Ansprüche

1.) Elektrisch betriebenes Gerät zum Zubereiten von Heißgetränken, wie Kaffee, Tee od. dgl., dessen Gehäuse einen Frischwasserbehälter aufnimmt, dessen Auslauf mit einem Durchlauferhitzer verbunden ist, aus dem das erhitzte Wasser in ein Steigrohr gelangt, dessen Auslauf über einem Filterbehälter angeordnet ist, der das zu behandelnde Gut, wie Kaffeemehl od. dgl. aufnimmt und unter dem ein Auffangbehälter angeordnet ist, welcher auf einen Gehäuseteil, wie einem Aufstellfuß, ruht, dadurch gekennzeichnet, daß der Einlaß (18) und der Auslaß (19) des Wasserrohres (20) des Durchlauferhitzers (22) des Kaffeeautomaten (10) unter Zwischenschaltung je einer Dichtung (16) unmittelbar an den Auslaß des Frischwasserbehälters (13) bzw. an den Einlaß des Steigrohres (17) anschließbar sind.

2.) Gerät nach Anspruch 1, dadurch gekennzeichnet, daß der Einlaß (18) und der Auslaß (19) des Wasserrohres (20) jeweils über einen angeformten Anschlußbereich (23) abgedichtet an einen Stutzen (15) des Frischwasserbehälters (13) bzw. des Steigrohres (17) angeschlossen sind.

3.) Gerät nach Anspruch 1 und 2, dadurch gekennzeichnet, daß im Bereich des äußersten freien Endes (32) des Anschlußbereiches (23) eine Nut (24), vorzugsweise eine Ringnut angeordnet ist, die eine Dichtung (16) aufnimmt, deren Umfangsfläche mit der Innenwand des Stutzens (15) zusammenwirkt.

4.) Gerät nach einem oder mehreren der Ansprüche 1 bis 3, dadurch gekennzeichnet, daß der Anschlußbereich (23) sowohl des Einlasses (18) als auch des Auslasses (19) des Wasserrohres (20) mit diesen einen Winkel, vorzugsweise einen rechten Winkel einschließt.

5.) Gerät nach Anspruch 1, dadurch gekennzeichnet, daß die Heizung des Durchlauferhitzers (22) eine Dickschichtheizung ist, deren aus pastenförmigem Werkstoff gebildete Dickschichtleiterbahn (33) wenigstens eine Seite des Durchlauferhitzers (22) erfaßt und deren eines Ende mit einem Schalter (37) und deren anderes Ende mit einem Relais (40) in Verbindung steht.

6.) Gerät nach Anspruch 1, dadurch gekennzeichnet, daß dem Einlaß (18) und dem Auslaß (19) des Wasserrohres (20) ein sie verbindendes und auf dem gewollten gegenseitigen Abstand haltendes Einsatzelement zugeordnet ist, welches einen Zentrier- und Führungskörper aufweist, durch den ein Fluchten der Stutzen (15) des Frischwasserbehälters (13) und des Steigrohres (17) einerseits und den Anschlußbereichen (23) andererseits gewährleistet ist.

7.) Gerät nach einem oder mehreren der vorangehenden Ansprüche, dadurch gekennzeichnet, daß die Dichtung (16) wahlweise eine innen bzw. außen am Stutzen (15) angreifende Dichtung ist.

8.) Gerät nach Ansprüchen 1 und 7, dadurch gekennzeichnet, daß bei außen am Stutzen (15) anliegender Dichtung (16) dieser eine Bewegung nach außen verhindernde und zugleich die Aufrechterhaltung der Dichtkraft gewährleistende Einrichtung wie Rippe, Anschlagleiste, Überwurfring oder dergleichen zugeordnet ist.

26   10

25

FIG.1

27   30   28

13   17   29

14   III

11   31

41

42   12   22

22

FIG.2

32

24

23   23   21

19   18

20

FIG.3

15

32

16

Robert Krups Stiftung & Co.KG

FIG.4